# EUROPÄISCHE PATENTSCHRIFT

(11) **EP 1 246 283 B1**
(45) Veröffentlichungstag und Bekanntmachung des Hinweises auf die Patenterteilung: **22.12.2010**
(21) Anmeldenummer: 02005941.6
(22) Anmeldetag: 15.03.2002
(51) Int. Cl.: H01M 8/02, H01M 2/08

(54) **Elektrisch isolierende Abstandshalter/Dichtungsanordnung**
Electrically insulating spacer/seal system
Système d'étanchéité/d'écartement électriquement isolant

(30) Priorität: 30.03.2001 DE 10116046
(43) Veröffentlichungstag der Anmeldung: 02.10.2002
(73) Patentinhaber: ElringKlinger AG, 72581 Dettingen (DE)
(72) Erfinder: Zerfass, Hans-Rainer, Dr., 65232 Taunusstein (DE); Anhorn, Thomas, 72581 Dettingen (DE); Schenk, Peter, 72531 Hohenstein (DE)
(74) Vertreter: Hoeger, Stellrecht & Partner Patentanwälte

(56) Entgegenhaltungen:
- EP-A- 0 907 215
- EP-A- 1 010 675
- DE-A- 4 333 478
- DE-A- 4 334 438
- DE-C- 19 607 947

## Beschreibung

Die vorliegende Erfindung betrifft eine Dichtung zum Abdichten eines Dichtspalts zwischen zwei abzudichtenden Bauteilen eines Brennstoffzellenblockverbunds, wobei die Dichtung mindestens eine fluiddichte Komponente aus einem elektrisch isolierenden Material umfasst.

Solche Dichtungen sind aus dem Stand der Technik bekannt.

Insbesondere ist es bekannt, die fluiddichte Komponente zum Abdichten des Dichtspalts aus einem Glaslot zu bilden.

Ein solches Glaslot ist beispielsweise in der EP 0 907 215 A1 beschrieben.

Wird eine solche Glaslot-Dichtung bei vergleichsweise hohen Betriebstemperaturen verwendet, wie sie beispielsweise in einer Hochtemperatur-Brennstoffzelle herrschen (beispielsweise ungefähr 800°C), so wird das Glaslot fließfähig, und die Glaslot-Dichtung verliert ihre Formstabilität. Werden die beiden abzudichtenden Bauteile in einem solchen Betriebszustand gegeneinander verspannt, so ist bei einer solchen Glaslot-Dichtung nicht auszuschließen, dass das fließfähige Glaslot aus dem Dichtspalt zwischen den abzudichtenden Bauteilen verdrängt wird und die beiden abzudichtenden Bauteile zumindest bereichsweise direkt miteinander in Kontakt kommen, wodurch die elektrische Isolationswirkung der Dichtung verlorengeht.

Die DE 43 33 478 A1 offenbart eine Dichtung mit den Merkmalen des Oberbegriffs von Anspruch 1.

Die DE 43 34 438 A1 offenbart ein Composit-Glaslot mit einer Glas-Komponente und einer Composit-Komponente, wobei bei einer Löttemperatur die Glas-Komponente flüssig und die Composit-Komponente fest ist. Die Composit-Komponente besteht aus isolierten, nicht in Kontakt miteinander stehenden Körnern.

Die EP 1 010 675 A1 offenbart ein Dichtungsmaterial für Brennstoffzellen, welches eine Glasmatrix mit darin eingeschlossenem Metalloxid umfasst.

Der vorliegenden Erfindung liegt die Aufgabe zugrunde, eine Dichtung der eingangs genannten Art zu schaffen, welche auch bei hohen Temperaturen und auch dann, wenn die beiden abzudichtenden Bauteile gegeneinander verspannt werden, eine ausreichende Fluiddichtheit und eine ausreichende elektrische Isolationswirkung aufweist.

Diese Aufgabe wird erfindungsgemäß durch eine Dichtung nach Anspruch 1 gelöst.

Durch die bei der Betriebstemperatur der Dichtung im wesentlichen formstabilen Distanzhalterelemente ist gewährleistet, dass die beiden abzudichtenden Bauteile weder im Ruhezustand noch im Betriebszustand der Dichtung direkt miteinander in Kontakt kommen können. Dadurch bleibt die elektrische Isolationswirkung der Dichtung in jedem Betriebszustand gewährleistet.

Zugleich sorgt die fluiddichte Komponente der Dichtung dafür, dass in jedem Betriebszustand der Dichtung die Zwischenräume zwischen dem mindestens einen Distanzhalter einerseits und den Dichtflächen der abzudichtenden Bauteile andererseits fluiddicht verschlossen bleiben, so dass auch die Abdichtfunktion der Dichtung in jedem Betriebszustand gewährleistet ist.

Die erfindungsgemäße Dichtung kann ein einzelnes Distanzhalterelement oder aber eine Mehrzahl von Distanzhalterelementen umfassen.

Bei einer besonderen Ausgestaltung der Erfindung umfaßt die Dichtung eine Vielzahl von Distanzhalterelementen, deren größte Längsausdehnung größer ist als ungefähr die halbe Dicke der Dichtung. In einem solchen Fall kann ein Distanzhalter, der die beiden abzudichtenden Bauteile auf der gewünschten Distanz voneinander hält, durch Zusammenlagerung einer geringen Anzahl von Distanzhalterelementen gebildet werden, welche sich so miteinander verkeilen, daß die Distanzhalter-Konfiguration unter dem von den gegeneinander verspannten abzudichtenden Bauteilen ausgeübten Druck nicht zerstört wird.

Falls die erfindungsgemäße Dichtung das einzige in dem Dichtspalt angeordnete Dichtelement darstellt, entspricht die Dicke der Dichtung der Höhe des Dichtspalts.

Bei einer bevorzugten Ausgestaltung der Erfindung ist vorgesehen, daß die Dichtung eine Vielzahl von Distanzhalterelementen umfaßt, die als Körner mit einer mittleren Korngröße von mehr als ungefähr 10 µm, vorzugsweise von mehr als ungefähr 50 µm ausgebildet sind. Solche Körner eignen sich besonders gut, um Distanzhalter für bei Brennstoffzellenblockverbünden übliche Dichtspalthöhen in der Größenordnung von 100 µm zu bilden.

Es kann aber auch vorgesehen sein, daß die Dichtung mindestens ein Distanzhalterelement umfaßt, das sich in einer Längsrichtung der Dichtung über eine Länge erstreckt, die mindestens ungefähr das Doppelte, vorzugsweise mindestens ungefähr das Zehnfache, der Dicke der Dichtung beträgt. Ein solches Distanzhalterelement gewährleistet die Einhaltung des Mindestabstands zwischen den abzudichtenden Bauteilen über eine großen, sich in der Längsrichtung der Dichtung erstreckenden Bereich.

Insbesondere dann, wenn die Dichtung insgesamt ringförmig ausgebildet ist, ist es von Vorteil, wenn die Dichtung mindestens ein Distanzhalterelement umfaßt, das als ringförmig geschlossener Körper ausgebildet ist.

Insbesondere kann ein ringförmig geschlossener Körper aus Glimmer verwendet werden, der als Distanzhalter den Kern der Dichtung bildet, welcher in die fluiddichte Komponente der Dichtung, die beispielsweise aus Natriumsilikat gebildet ist, eingebettet ist.

Da die Distanzhalterelemente in der Regel zumindest in Punktkontakt mit mindestens einer der Dichtflächen der abzudichtenden Bauteile und/oder mit weiteren Distanzhalterelementen kommen, ist es zur Aufrechterhaltung der elektrischen Isolationswirkung der Dichtung von Vorteil, wenn das mindestens eine Distanzhalterelement aus einem elektrisch isolierenden Material gebildet ist.

Hierunter soll auch der Fall verstanden werden, daß das Distanzhalterelement einen Kern aus einem elektrisch leitfähigen Material umfaßt, der mit einer elektrisch isolierenden Beschichtung versehen ist.

Aufgrund ihrer elektrischen Isolationswirkung und ihrer Formhaltigkeit auch bei hohen Temperaturen eignen sich Oxid-Keramik-Materialien und/oder Glaskeramik-Materialien besonders als Material für das mindestens eine Distanzhalterelement.

Besonders günstig ist es, wenn das Distanzhalterelement ein Metalloxid-Keramik-Material, vorzugsweise Magnesiumoxid, Aluminiumoxid und/oder Zirkonoxid, umfaßt.

Um die Bildung einer ausreichenden Anzahl von Distanzhaltern zu ermöglichen, ist es von Vorteil, wenn der Anteil der Distanzhalterelemente an der Dichtung mindestens ungefähr 1 Gewichts-%, vorzugsweise mindestens ungefähr 2 Gewichts-%, beträgt.

Andererseits ist es von Vorteil, wenn der Anteil der Distanzhalterelemente an der Dichtung höchstens ungefähr 50 Gewichts-%, vorzugsweise höchstens ungefähr 10 Gewichts-%, beträgt. Dadurch wird gewährleistet, daß der Anteil der fluiddichten Komponente der Dichtung noch groß genug ist, um die zwischen den Distanzhalterelementen und den abzudichtenden Bauteilen verbleibenden Zwischenräume fluiddicht zu verschließen.

Die erfindungsgemäße Dichtung ist besonders vorteilhaft, wenn die fluiddichte Komponente ein Material umfaßt, das während einer Herstellungsphase der Dichtung und/oder im Betriebszustand der Dichtung nicht formstabil ist.

So kann die fluiddichte Komponente beispielsweise ein Glaslot umfassen, welches bei einer für eine Hochtemperatur-Brennstoffzelle typischen Betriebstemperatur von 800°C fließfähig ist.

Durch die Form-Anpassungsfähigkeit der fluiddichten Komponente im Betriebszustand der Dichtung wird in diesem Fall erreicht, daß eine ausreichende Abdichtwirkung der Dichtung auch dann gewährleistet ist, wenn sich die Höhe des Dichtspalts - bereichsweise oder über die gesamte Dichtung hinweg - verändert, beispielsweise aufgrund von Relativbewegungen der abzudichtenden Bauteile oder aufgrund von inkompatiblen thermischen Ausdehnungskoeffizienten.

Andererseits kann jedoch auch vorgesehen sein, daß die fluiddichte Komponente ein Material umfaßt, das im Betriebszustand der Dichtung formstabil ist.

Insbesondere kann vorgesehen sein, daß die fluiddichte Komponente ein Material umfaßt, das zwar im Betriebszustand der Dichtung im wesentlichen formstabil ist, jedoch während einer Herstellungsphase der Dichtung nicht formstabil ist.

Dies trifft beispielsweise auf Dichtungsmassen zu, die in Form eines fließfähigen und/oder pastösen Ausgangsmaterials in den Zwischenraum zwischen den abzudichtenden Bauelementen eingebracht werden und sich dann verfestigen und/oder aushärten, um die fertige Dichtung zu bilden.

Dies trifft beispielsweise dann zu, wenn die fluiddichte Komponente Natriumsilikat umfaßt, das in Form einer wässrigen Natriumsilikatlösung auf eines oder auf beide der abzudichtenden Bauteile aufgetragen wird.

Nach erfolgtem Aushärten liegt der Schmelzpunkt des Natriumsilikats oberhalb von ungefähr 1000°C, so daß die daraus gebildete fluiddichte Komponente auch bei den Betriebstemperaturen einer Hochtemperatur-Brennstoffzelle formstabil ist.

Zur Erhöhung des elektrischen Widerstands ist es von Vorteil, wenn die fluiddichte Komponente Glimmer, vorzugsweise Phlogopit, als Füllstoff umfaßt.

Um das Auftreten von Rissen in der Dichtung beim Aufheizen von der Ruhetemperatur auf die Betriebstemperatur der Dichtung zu verhindern, ist es günstig, wenn das Material des mindestens einen Distanzhalterelements einen thermischen Ausdehnungskoeffizienten aufweist, der bei der Betriebstemperatur der Dichtung um höchstens 50 %, vorzugsweise um höchstens 30 %, von dem thermischen Ausdehnungskoeffizienten des Materials der fluiddichten Komponente abweicht.

Ein weiteres für die fluiddichte Komponente der Dichtung geeignetes Material, das in der Herstellungsphase der Dichtung fließfähig ist, nach der Herstellung der Dichtung aber auch bei den hohen Betriebstemperaturen einer Hochtemperatur-Brennstoffzelle formstabil und thermisch beständig ist, ist beispielsweise ein hochtemperaturbeständiger Kaltklebstoff, der unter der Bezeichnung CANOL 460 von der Firma Segliwa GmbH, Fabrik Elektrotechnischer Isolierstoffe, in Wiesbaden, Deutschland, vertrieben wird.

Dieser Kaltklebstoff kann im fließfähigen Zustand mit den Dichtungshalterelementen versetzt und dann auf eine oder auf beide Dichtflächen der abzudichtenden Bauteile aufgetragen werden. Nach erfolgtem Abbinden des Klebstoffes ist die daraus gebildete fluiddichte Komponente auch bei Temperaturen bis zu 800°C im wesentlichen formstabil. Vor dem erfolgten Abbinden werden die abzudichtenden Bauteile durch die integrierten Distanzhalterelemente auf Abstand voneinander gehalten, auch dann, wenn die abzudichtenden Bauteile gegeneinander verspannt werden.

Anspruch 14 ist auf eine Bauteilgruppe gerichtet, die zwei gegeneinander abzudichtende Bauteile eines Brennstoffzellenblockverbundes und eine zwischen den beiden Bauteilen angeordnete erfindungsgemäße Dichtung umfasst.

Um das Entstehen von Rissen zwischen den abzudichtenden Bauteilen und der fluiddichten Komponente der Dichtung zu verhindern, ist es günstig, wenn das Material mindestens eines der gegeneinander abzudichtenden Bauteile einen thermischen Ausdehnungskoeffizienten aufweist, der bei der Betriebstemperatur der Bauteilgruppe um höchstens 50 %, vorzugsweise um höchstens 30 % von dem thermischen Ausdehnungskoeffizienten des Materials der fluiddichten Komponente abweicht.

Ebenfalls aus Gründen der erhöhten Rißbeständigkeit ist es von Vorteil, wenn das Material mindestens eines der gegeneinander abzudichtenden Bauteile einen thermischen Ausdehnungskoeffizienten aufweist, der bei der Betriebstemperatur der Bauteilgruppe um höchstens 50 %, vorzugsweise um höchstens 30 %, von dem thermischen Ausdehnungskoeffizienten des Materials des mindestens einen Distanzhalterelements abweicht.

Bei einer bevorzugten Ausgestaltung der Erfindung ist vorgesehen, daß das Material mindestens eines der gegeneinander abzudichtenden Bauteile ein metallisches Material, vorzugsweise einen Stahl, umfaßt.

Um zu vermeiden, daß das Material einer zeitweise fließfähigen fluiddichten Komponente aus dem Dichtspalt zwischen den beiden abzudichtenden Bauteilen abfließt, ist es von Vorteil, wenn mindestens eines der gegeneinander abzudichtenden Bauteile eine Vertiefung aufweist, in welcher die Dichtung zumindest teilweise aufgenommen ist.

Die erfindungsgemäße Bauteilgruppe eignet sich insbesondere zur Verwendung in einem Brennstoffzellenblockverbund, insbesondere einem Hochtemperatur-Brennstoffzellenblockverbund.

Ein solcher Hochtemperatur-Brennstoffzellenblockverbund umfaßt eine Mehrzahl von Hochtemperatur-Brennstoffzelleneinheiten, die eine Betriebstemperatur von bis zu 950°C aufweisen und ohne externen Reformer direkt mit einem kohlenwasserstoffhaltigen Brenngas, wie beispielsweise Methan oder Erdgas oder, alternativ hierzu, unter Verwendung eines externen Reformers, mit einem Diesel- oder Benzinkraftstoff betrieben werden können.

Weitere Merkmale und Vorteile der Erfindung sind Gegenstand der nachfolgenden Beschreibung und zeichnerischen Darstellung von Ausführungsbeispielen. In den Zeichnungen zeigen:
- Fig. 1: eine schematische perspektivische Darstellung einer Brennstoffzellenvorrichtung;
- Fig. 2: einen schematischen Längsschnitt durch einen in dem Gehäuse der Brennstoffzellenvorrichtung aus Fig. 1 angeordneten Brennstoffzellenblockverbund;
- Fig. 3: einen schematischen Längsschnitt durch eine Kathoden-Anoden-Elektrolyt-Einheit mit daran angrenzenden Kontaktplatten;
- Fig. 4: eine schematische perspektivische Explosionsdarstellung zweier in einer Stapelrichtung aufeinanderfolgender Brennstoffzelleneinheiten des Brennstoffzellenblockverbunds aus Fig. 2;
- Fig. 5: eine schematische Draufsicht auf eine Kontaktplatte einer der Brennstoffzelleneinheiten aus Fig. 4;
- Fig. 6: eine schematische Draufsicht auf einen Fluidführungsrahmen einer der Brennstoffzelleneinheiten aus Fig. 4;
- Fig. 7: den rechten Teil eines schematischen Längsschnitts durch drei längs der Stapelrichtung aufeinanderfolgende Brennstoffzelleneinheiten des Brennstoffzellenblockverbunds aus Fig. 2, wobei ein Fluidführungsrahmen einer Brennstoffzelleneinheit über eine Flachdichtung an der Kontaktplatte einer benachbarten Brennstoffzelleneinheit anliegt;
- Fig. 8: einen schematischen Schnitt durch die Flachdichtung aus Fig. 7;
- Fig. 9: einen schematischen Schnitt durch eine zweite Ausführungsform der Flachdichtung;
- Fig. 10: einen schematischen Schnitt durch eine dritte Ausführungsform der Flachdichtung; und
- Fig. 11: einen schematischen Teilschnitt durch eine einen Fluidführungsrahmen, eine Kontaktplatte und eine zwischen dem Fluidführungsrahmen und der Kontaktplatte angeordnete Flachdichtung bei einer weiteren Ausführungsform des Brennstoffzellenblockverbundes.

Gleiche oder funktional äquivalente Elemente sind in allen Figuren mit denselben Bezugszeichen bezeichnet.

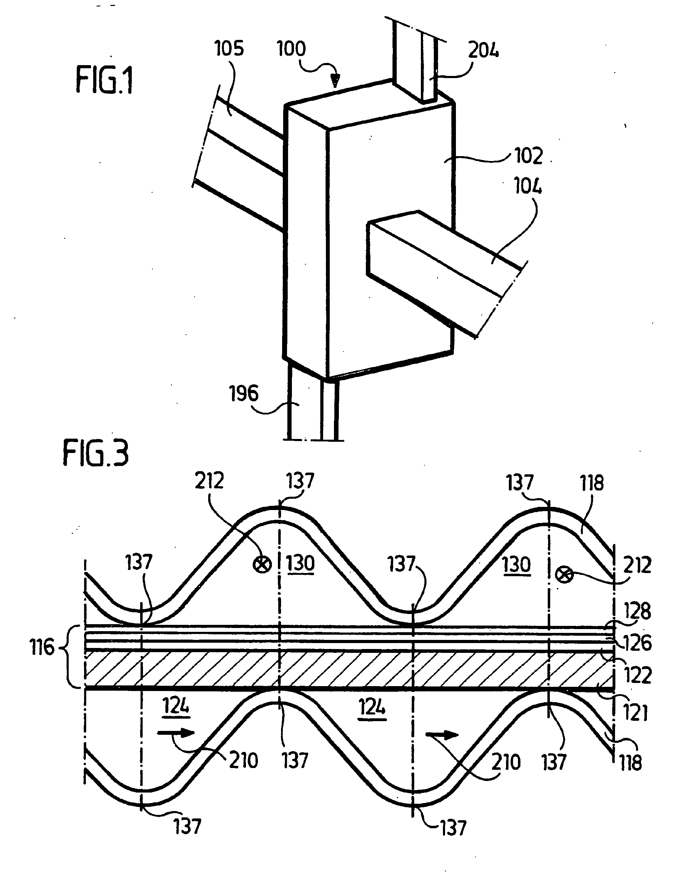

Eine in den Fig. 1 bis 8 dargestellte, als Ganzes mit 100 bezeichnete Brennstoffzellenvorrichtung umfaßt ein im wesentlichen quaderförmiges Gehäuse 102 (siehe Fig. 1), in das eine Oxidationsmittel-Zuführleitung 104 mündet, über die dem Innenraum des Gehäuses 102 ein Oxidationsmittel, beispielsweise Luft oder reiner Sauerstoff, zugeführt wird.

Ferner mündet in das Gehäuse 102 eine Oxidationsmittel-Abführleitung 105, durch welche überschüssiges Oxidationsmittel aus dem Innenraum des Gehäuses 102 abführbar ist.

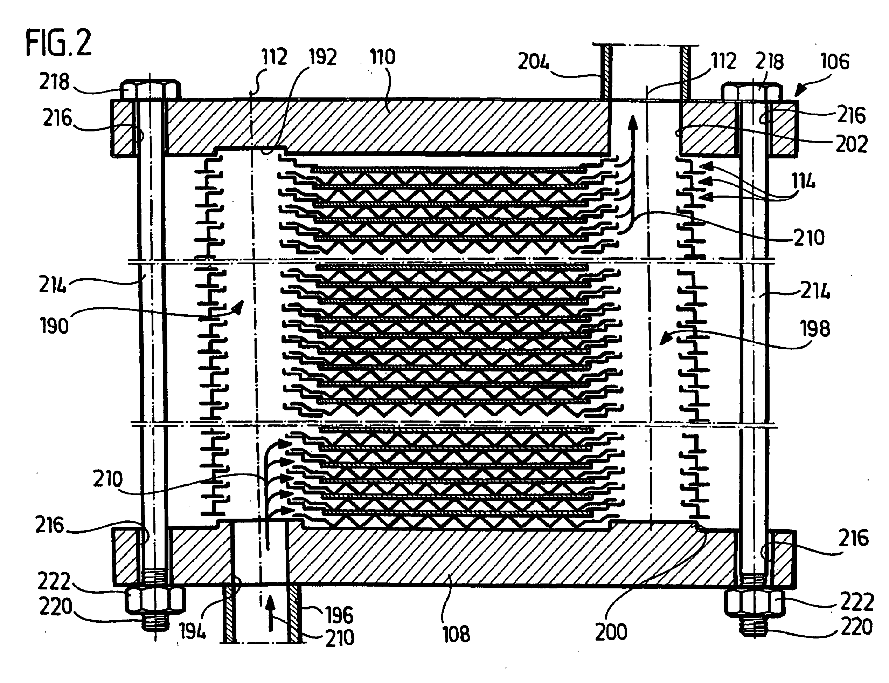

Im Innenraum des Gehäuses 102 ist ein in Fig. 2 als Ganzes dargestellter Brennstoffzellenblockverbund 106 angeordnet, welcher eine untere Endplatte 108, eine obere Endplatte 110 und eine Vielzahl zwischen der unteren Endplatte 108 und der oberen Endplatte 110 angeordneter, längs einer Stapelrichtung 112 aufeinanderfolgender Brennstoffzelleneinheiten 114 umfaßt.

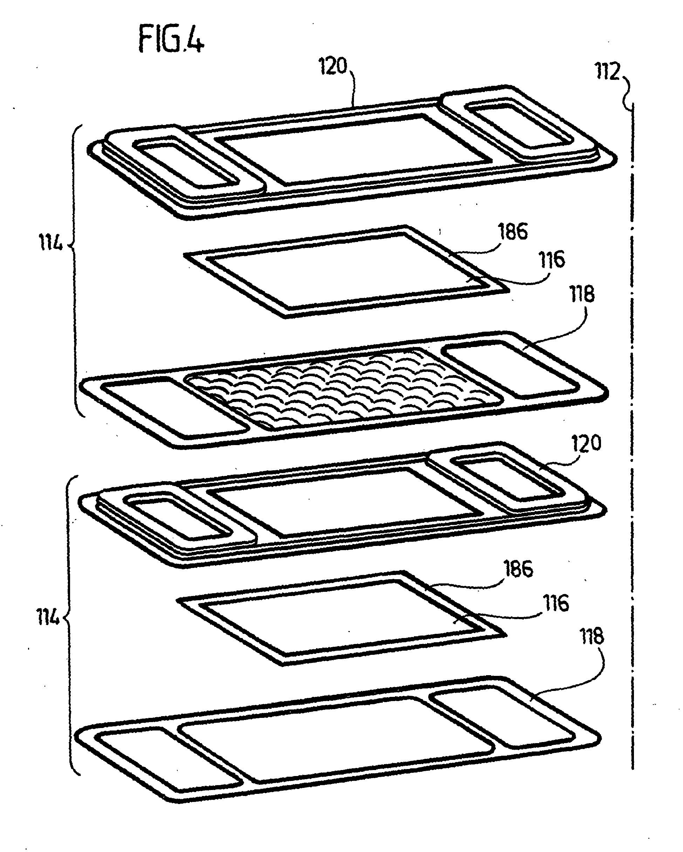

Wie am besten aus Fig. 4 zu ersehen ist, welche eine perspektivische Explosionsdarstellung zweier längs der Stapelrichtung 112 aufeinanderfolgender Brennstoffzelleneinheiten 114 zeigt, umfaßt jede der Brennstoffzelleneinheiten 114 eine im wesentlichen plattenförmige Kathoden-Anoden-Elektrolyt-Einheit 116 (im folgenden kurz: KAE-Einheit), die zwischen einer Kontaktplatte 118 und einem Fluidführungsrahmen 120 gehalten ist.

Die KAE-Einheit 116 umfaßt, wie in Fig. 3 rein schematisch dargestellt ist, eine gasdurchlässige, elektrisch leitfähige Trägerschicht 121, die beispielsweise als Netz aus einem metallischen Material ausgebildet sein kann, durch dessen Maschen ein Brenngas aus einem an die Trägerschicht 121 angrenzenden Brenngasraum 124 hindurchtreten kann.

Ferner umfaßt die KAE-Einheit 116 eine auf der Trägerschicht 121 angeordnete plattenförmige Anode 122 aus einem elektrisch leitfähigen keramischen Material, welches porös ist, um dem Brenngas aus dem Brenngasraum 124 den Durchtritt durch die Anode 122 zu dem an die Anode 122 angrenzenden Elektrolyten 126 zu ermöglichen.

Als Brenngas kann ein kohlenwasserstoffhaltiges Gasgemisch oder reiner Wasserstoff verwendet werden.

Der Elektrolyt 126 ist vorzugsweise als Feststoffelektrolyt ausgebildet.

Auf der der Anode 122 gegenüberliegenden Seite des Elektrolyten 126 grenzt an denselben eine plattenförmige Kathode 128 an, die aus einem elektrisch leitfähigen keramischen Material gebildet ist und eine Porosität aufweist, um einem Oxidationsmittel, beispielsweise Luft oder reinem Sauerstoff, aus einem an die Kathode 128 angrenzenden Oxidationsmittelraum 130 den Durchtritt zu dem Elektrolyten 126 zu ermöglichen.

In Betrieb der Brennstoffzellenvorrichtung 100 weist die KAE-Einheit 116 jeder Brennstoffzelleneinheit 114 eine Temperatur von beispielsweise ungefähr 800°C auf, bei welcher der Elektrolyt 126 für Sauerstoffionen leitfähig ist. Das Oxidationsmittel aus dem Oxidationsmittelraum 130 nimmt an der Anode 126 Elektronen auf und gibt zweiwertige Sauerstoffionen an den Elektrolyten 126 ab, welche durch den Elektrolyten 126 hindurch zur Anode 122 wandern. An der Anode 122 wird das Brenngas aus dem Brenngasraum 124 durch die Sauerstoffionen aus dem Elektrolyten 126 oxidiert und gibt dabei Elektronen an die Anode 122 ab.

Die Kontaktplatten 118 dienen dazu, die bei der Reaktion an der Anode 122 freiwerdenden Elektronen von der Anode 122 über die Trägerschicht 121 abzuführen bzw. die für die Reaktion an der Kathode 128 benötigten Elektronen der Kathode 128 zuzuführen.

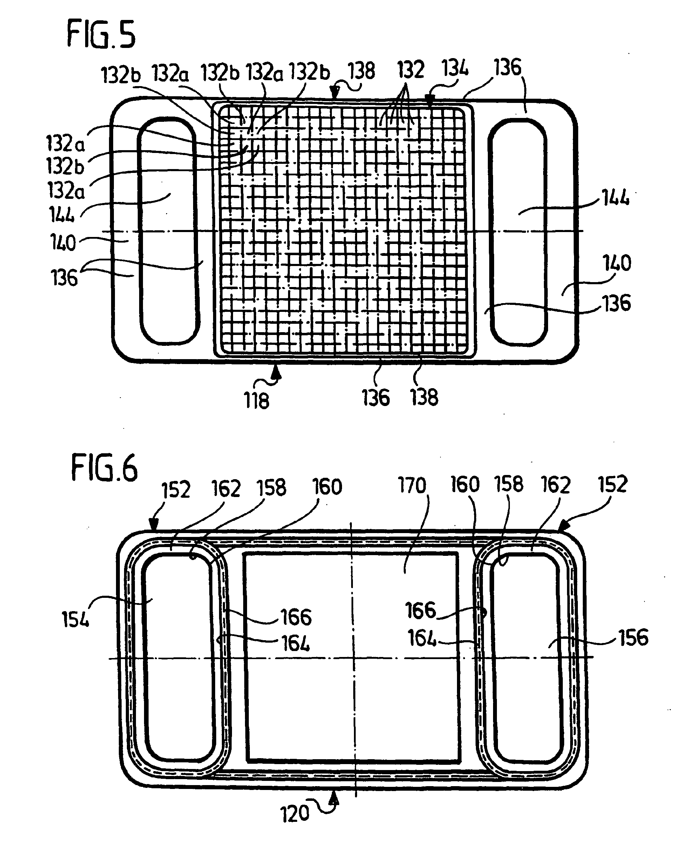

Hierzu besteht jede der Kontaktplatten 118 aus einem elektrisch gut leitfähigen Metallblech, das (wie am besten aus Fig. 5 zu ersehen ist) mit einer Vielzahl von Kontaktelementen 132 versehen ist, welche beispielsweise die Form von aneinander angrenzenden Vorsprüngen und Vertiefungen mit jeweils quadratischem Grundriß aufweisen, so daß das aus den Kontaktelementen 132 gebildete Kontaktfeld 134 der Kontaktplatte 118 die Struktur eines in zwei zueinander senkrechten Richtungen gewellten Wellblechs aufweist.

Jedes der Kontaktelemente 132 weist einen mittigen Kontaktbereich 137 auf, an dem es mit einer angrenzenden KAE-Einheit 116 in elektrisch leitendem Kontakt steht.

Die kathodenseitigen Kontaktelemente 132b der Kontaktplatten 118 stehen mit der Kathode 128 der einer benachbarten Brennstoffzelleneinheit 114 zugehörigen KAE-Einheit 116 in elektrisch leitfähigem Punktkontakt, so daß Elektronen von der Kontaktplatte 118 zu der Kathode 128 gelangen können. Auf diese Weise ermöglichen die Kontaktplatten 118 den Ladungsausgleich zwischen den Anoden 122 und Kathoden 128 längs der Stapelrichtung 112 aufeinanderfolgender KAE-Einheiten 116.

Die an den Enden des Brennstoffzellenblockverbunds 106 angeordneten Kontaktplatten 118 sind mit einem externen Stromkreislauf verbunden, um die an diesen randständigen Kontaktplatten 118 entstehenden elektrischen Ladungen abzugreifen.

Wie am besten aus der Draufsicht der Fig. 5 zu ersehen ist, ist das mit den Kontaktelementen 132 versehene mittige, rechteckige Kontaktfeld 134 jeder Kontaktplatte 118 von einem ebenen Flanschbereich 136 umgeben, welchen den äußeren Rand der Kontaktplatte 118 bildet.

Im Bereich der schmalen Längsseiten 138 des Flanschbereichs 136 liegt die Unterseite der KAE-Einheit 116 auf der Oberseite des Flanschbereichs 136 auf.

Die breiten Seitenbereiche 140 des Flanschbereichs 136 weisen jeweils eine Durchgangsöffnung 144 auf, welche den Durchtritt von den Brennstoffzelleneinheiten 114 zuzuführendem Brenngas bzw. von aus den Brennstoffzelleneinheiten 114 abzuführendem Abgas ermöglicht.

Jede der Kontaktplatten 118 ist als Blechformteil ausgebildet, welches aus einer im wesentlichen ebenen, im wesentlichen rechteckigen Blechlage durch Prägen und/oder Tiefziehen sowie durch Ausstanzen oder Ausschneiden der Durchgangsöffnungen 144 gebildet ist.

Auch die Fluidführungsrahmen 120 sind als Blechformteil aus einer im wesentlichen ebenen, im wesentlichen rechteckigen Blechlage gebildet.

Wie am besten aus Fig. 6 zu ersehen ist, weist jeder Fluidführungsrahmen 120 an seinen Endbereichen den Durchgangsöffnungen 144 in den Kontaktplatten entsprechende Durchgangsöffnungen, nämlich eine Brenngasdurchgangsöffnung 154 und eine Abgasdurchgangsöffnung 156, auf.

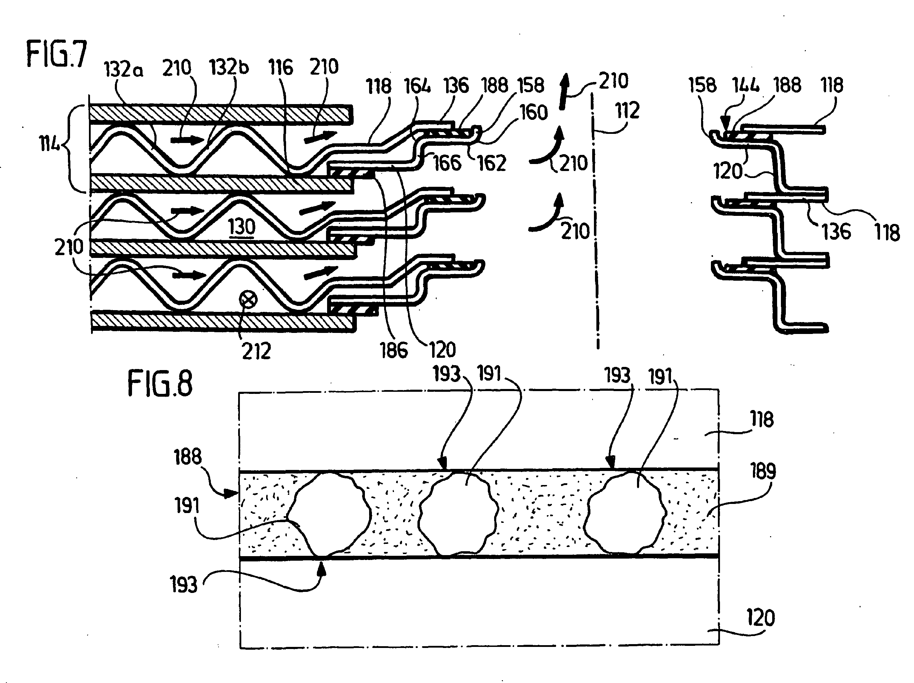

Wie am besten aus den Fig. 6 und 7 zu ersehen ist, ist jede der Durchgangsöffnungen 154, 156 in einem Fluidführungsrahmen 120 von einem sich längs der Stapelrichtung 112 erstreckenden Kragen 158, einem längs einer Biegelinie 160 an den Kragen 158 angrenzenden, sich senkrecht zur Stapelrichtung 112 von der Durchgangsöffnung weg erstreckenden Dichtungsauflagebereich 162 und einem an einer Biegelinie 164 an den Dichtungsauflagebereich 162 angrenzenden, parallel zur Stapelrichtung 112 ausgerichteten Kanalwandbereich 166 umgeben.

Wie aus Fig. 6 zu ersehen ist, weist jeder der Fluidführungsrahmen 120 zwischen den Durchgangsöffnungen 154, 156 eine im wesentlichen rechteckige, mittige Durchtrittsöffnung 170 für den Durchtritt der Kontaktelemente 132 der Kontaktplatte 118 einer benachbarten Brennstoffzelleneinheit 114 auf.

Wie am besten aus Fig. 7 zu ersehen ist, sind die beiden die Durchgangsöffnungen 154, 156 des Fluidführungsrahmens 120 umgebenden Dichtungsauflagebereiche 162 an ihrer der KAE-Einheit 116 abgewandten Oberseite mit jeweils einer Gaskanal-Dichtung 188 versehen.

Wie am besten aus der Schnittdarstellung der Fig. 8 zu ersehen ist, bildet diese Gaskanal-Dichtung 188 eine im wesentlichen ebene Schicht mit einer im wesentlichen konstanten Dicke von beispielsweise ungefähr 100 µm, die zwischen der Oberseite des Fluidführungsrahmens 120 und der Unterseite der Kontaktplatte 118 angeordnet ist und mit beiden flächig in Kontakt steht.

Die Gaskanal-Dichtung 188 umfaßt eine Matrix 189 und in die Matrix 189 eingebettete Distanzhalterelemente 191, die beispielsweise die Form von annähernd sphärisch ausgebildeten Körnern aufweisen, deren mittlerer Korndurchmesser ungefähr der Dicke des Dichtspaltes zwischen der Kontaktplatte 118 und dem Fluidführungsrahmen 120 entspricht, so daß sich die Distanzhalterelemente 191 im wesentlichen über die gesamte Dicke der Gaskanal-Dichtung 188 erstrecken und sowohl mit der Unterseite der Kontaktplatte 118 als auch mit der Oberseite des Fluidführungsrahmens 120 zumindest in punktförmigem Kontakt stehen.

Die Distanzhalterelemente 191 bilden somit jeweils für sich genommen jeweils einen Distanzhalter 193, welcher die beiden abzudichtenden Bauteile, nämlich die Kontaktplatte 118 und den Fluidführungsrahmen 120, auf der gewünschten Distanz von ungefähr 100 µm hält.

Die Distanzhalterelemente 191 sind vorzugsweise aus einem Metalloxid-Keramik-Material, beispielsweise aus Magnesiumoxid, gebildet, welches in einer Mineralmühle zu einem Pulver mit dem gewünschten mittleren Korndurchmesser zermahlen worden ist.

Die Matrix 189 ist aus einem elektrisch isolierenden Material gebildet, welches eine gasdichte, elektrisch isolierende Dichtungsmasse bildet.

Als Material für die Matrix kann beispielsweise Natriumsilikat, das vorzugsweise Glimmer als Füllstoff enthält, verwendet werden.

Der Schmelzpunkt von Natriumsilikat liegt höher als 1000°C, so daß die Matrix der Gaskanal-Dichtung 188 bei der Betriebstemperatur der Brennstoffzellenvorrichtung 100 sich im festen Zustand befindet und formstabil ist.

Zur Herstellung der Gaskanal-Dichtung 188 wird ein pastöses Ausgangsmaterial verwendet, das beispielsweise folgende Zusammensetzung aufweist:
- 100 Gewichtsteile Natriumsilikatlösung, die 40 Gewichts-% Natriumsilikat in Wasser enthält;
- 50 Gewichtsteile Glimmer; und
- 4,5 Gewichtsteile Magnesiumoxid mit einer mittleren Korngröße von ungefähr 100 µm.

Dieses pastöse Ausgangsmaterial wird im Siebdruckverfahren oder mittels Walzenbeschichtung auf den Dichtungsauflagebereich 162 des Fluidführungsrahmens 120 aufgebracht.

Wird anschließend - noch vor dem Aushärten des pastösen Ausgangsmaterials - die Kontaktplatte 118 von oben gegen die Gaskanal-Dichtung 188 gepreßt, so weicht zwar die noch nicht formstabile Matrix seitlich aus; durch die formstabilen Distanzhalterelemente aus Magnesiumoxid ist jedoch gewährleistet, daß der Dichtspalt zwischen der Kontaktplatte 118 und dem Fluidführungsrahmen 120 die gewünschte Mindesthöhe von ungefähr 100 µm nicht unterschreitet.

Nach dem Aushärten der Matrix 189 aus Natriumsilikat und Glimmer ist auch die Matrix 189, insbesondere auch bei der Betriebstemperatur der Brennstoffzellenvorrichtung 100 von ungefähr 800°C, selbst formstabil.

Bei dieser Ausführungsform werden die Distanzhalterelemente 191 also vorwiegend zur Aufrechterhaltung einer Mindesthöhe des Dichtspalts während der Herstellung der Dichtung benötigt.

Da das Magnesiumoxid der Distanzhalterelemente 191 sich bei der Aufheizung von Raumtemperatur auf die Betriebstemperatur der Brennstoffzellenvorrichtung 100 von ungefähr 800°C im wesentlichen gleich stark thermisch ausdehnt wie das Material der Matrix 189 (mit Glimmer gefülltes Natriumsilikat), entstehen im Betrieb der Brennstoffzellenvorrichtung 100 keine Risse in der Gaskanal-Dichtung 188.

Um die Entstehung von Rissen an den Grenzflächen zwischen der Gaskanal-Dichtung 188 und der Kontaktplatte 118 bzw. dem Fluidführungsrahmen 120 zu vermeiden, wird als Material für die Kontaktplatte 118 und für den Fluidführungsrahmen 120 ein metallisches Material gewählt, das sich bei der Aufheizung von der Raumtemperatur auf die Betriebstemperatur der Brennstoffzellenvorrichtung 100 im wesentlichen gleich stark thermisch ausdehnt wie das Material der Matrix 189 und das Material der Distanzhalterelemente 191.

Bei Verwendung von Distanzhalterelementen 191 aus Magnesiumoxid und einer Matrix 189 aus mit Glimmer gefülltem Natriumsilikat eignet sich als Material für die Kontaktplatte 118 und den Fluidführungsrahmen 120 insbesondere ein Stahl mit der folgenden Zusammensetzung:

5,0 bis 6,0 Gewichts-% Aluminium, 20 bis 22 Gewichts-% Chrom, 0,05 bis 0,15 Gewichts-% Yttrium, 0 bis 0,30 Gewichts-% Nickel, 0,01 bis 0,10 Gewichts-% Kohlenstoff, 0 bis 0,50 Gewichts-% Mangan, 0 bis 0,30 Gewichts-% Silizium, 0,01 bis 0,10 Gewichts-% Titan, 0,01 bis 0,10 Gewichts-% Zirkonium, Rest Eisen.

Wie am besten aus den Fig. 4 und 7 zu ersehen ist, ist jede KAE-Einheit 116 am Rand ihrer dem Fluidführungsrahmen 120 derselben Brennstoffzelleneinheit 114 zugewandten Oberseite mit einer gasdichten, elektrisch isolierenden Brenngasraum-Dichtung 186 versehen, die seitlich über die KAE-Einheit 116 übersteht.

Die Brenngasraum-Dichtung 186 kann in derselben Weise ausgebildet sein und hergestellt werden wie die Gaskanal-Dichtung 188.

Alternativ hierzu kann auch vorgesehen sein, daß die Brenngasraum-Dichtung 186 eine Flachdichtung aus Glimmer umfaßt.

Die Brennstoffzelleneinheiten 114 des Brennstoffzellenblockverbunds 106 sind längs der Stapelrichtung 112 so aufeinandergestapelt, daß die kathodenseitigen Kontaktelemente 132b jeder Kontaktplatte 118 sich durch die Durchtrittsöffnung 170 im Fluidführungsrahmen 120 der jeweils darunter angeordneten Brennstoffzelleneinheit 114 zu der Kathode der KAE-Einheit 116 der darunter angeordneten Brennstoffzelleneinheit 114 erstrecken und in elektrisch leitendem Kontakt an derselben anliegen.

Der Flanschbereich 136 jeder Kontaktplatte 118 liegt dabei auf der Gaskanal-Dichtung 188 des Fluidführungsrahmens 120 der jeweils darunter angeordneten Brennstoffzelleneinheit 114 auf, wobei sich der Kragen 158, welcher die Durchgangsöffnung 154 bzw. 156 in dem Fluidführungsrahmen 120 umgibt, in die jeweils entsprechende Durchgangsöffnung 144 der Kontaktplatte 118 hinein erstreckt.

Der die Brenngasdurchgangsöffnung 154 umgebende Endbereich 152 jedes Fluidführungsrahmens 120 bildet einen Brenngasführungsbereich. Der die Abgasdurchgangsöffnung 156 umgebende Endbereich 152 jedes Fluidführungsrahmens 120 bildet einen Abgasführungsbereich.

Wie am besten aus der Schnittdarstellung der Fig. 2 zu ersehen ist, bilden die längs der Stapelrichtung 112 aufeinanderfolgenden Brenngasführungsbereiche der Fluidführungsrahmen 120 zusammen einen sich parallel zur Stapelrichtung 112 erstreckenden Brenngaskanal 190, der an seinem oberen Ende in einer Ausnehmung 192 an der Unterseite der oberen Endplatte 110 mündet.

An dem unteren Ende des Brenngaskanals 190 mündet in denselben eine Brenngaszuführöffnung 194, welche die untere Endplatte 108 des Brennstoffzellenblockverbunds 106 koaxial zu dem Brenngaskanal 190 durchsetzt.

An das dem Brenngaskanal 190 abgewandte Ende der Brenngaszuführöffnung 194 ist eine Brenngaszuführleitung 196 angeschlossen, welche durch das Gehäuse 102 der Brennstoffzellenvorrichtung 100 gasdicht hindurchgeführt und an eine (nicht dargestellte) Brenngaszufuhr angeschlossen ist, welche der Brenngaszuführleitung 196 ein Brenngas, beispielsweise ein kohlenwasserstoffhaltiges Gas oder reinen Wasserstoff, zuführt.

Wie ebenfalls aus Fig. 2 zu ersehen ist, bilden die Abgasführungsbereiche der längs der Stapelrichtung 112 aufeinanderfolgenden Fluidführungsrahmen 120 zusammen einen Abgaskanal 198, der parallel zu der Stapelrichtung 112 ausgerichtet ist und an seinem unteren Ende durch einen an der Oberseite der unteren Endplatte 108 des Brennstoffzellenblockverbunds 106 vorgesehenen Vorsprung 200 verschlossen ist.

An seinem oberen Ende mündet der Abgaskanal 198 in eine zu demselben koaxiale Abgasabführöffnung 202, welche die obere Endplatte 110 des Brennstoffzellenblockverbunds 106 durchsetzt und an ihrem dem Abgaskanal 198 abgewandten Ende an eine Abgasabführleitung 204 angeschlossen ist.

Die Abgasabführleitung 204 ist gasdicht durch das Gehäuse 102 der Brennstoffzellenvorrichtung 100 hindurchgeführt und an eine (nicht dargestellte) Abgasbehandlungseinheit angeschlossen.

Im Betrieb der Brennstoffzellenvorrichtung 100 strömt das Brenngas durch die Brenngaszuführleitung 196 und die Brenngaszuführöffnung 194 in den Brenngaskanal 190 ein und verteilt sich von dort durch die Zwischenräume zwischen den Kontaktplatten 118 und den jeweils derselben Brennstoffzelleneinheit 114 zugehörigen Fluidführungsrahmen 120 auf die Brenngasräume 124 der Brennstoffzelleneinheiten 114, welche jeweils durch die Kontaktplatte 118, den Fluidführungsrahmen 120 und die KAE-Einheit 116 der betreffenden Brennstoffzelleneinheit 116 der betreffenden Brennstoffzelleneinheit 114 umschlossen sind.

Das Brenngas wird zumindest teilweise an der Anode 122 der jeweiligen KAE-Einheit 116 oxidiert.

Das Oxidationsprodukt (beispielsweise Wasser) gelangt zusammen mit überschüssigem Brenngas aus den Brenngasräumen 124 der Brennstoffzelleneinheiten 114 in den Abgaskanal 198, aus welchem es durch die Abgasabführöffnung 202 und die Abgasabführleitung 204 zu der Abgasbehandlungseinheit abgeführt wird.

Das für den Betrieb der Brennstoffzellenvorrichtung 100 benötigte Oxidationsmittel (beispielsweise Luft oder reiner Sauerstoff) wird dem Innenraum des Gehäuses 102 durch die Oxidationsmittel-Zuführleitung 104 zugeführt.

Im Innenraum des Gehäuses 102 verteilt sich das Oxidationsmittel auf die zwischen den Brenngasräumen 124 der Brennstoffzelleneinheiten 114 ausgebildeten Oxidationsmittelräume 130, welche durch jeweils eine Kontaktplatte 118 einer Brennstoffzelleneinheit 114 sowie durch den Fluidführungsrahmen 120 und die Kathode 128 der KAE-Einheit 116 einer benachbarten Brennstoffzelleneinheit 114 umschlossen sind.

In die Oxidationsmittelräume hinein und aus denselben wieder heraus gelangt das Oxidationsmittel durch die Zwischenräume zwischen jeweils einem Fluidführungsrahmen 120 einer Brennstoffzelleneinheit 114 und der Kontaktplatte 118 der in der Stapelrichtung 112 darauffolgenden Brennstoffzelleneinheit 114.

Überschüssiges Oxidationsmittel gelangt aus den Oxidationsmittelräumen 130 der Brennstoffzelleneinheiten 114 auf der der Eintrittsseite des Oxidationsmittels gegenüberliegenden Austrittsseite hinaus und wird durch die Oxidationsmittel-Abführleitung 105 aus dem Innenraum des Gehäuses 102 der Brennstoffzellenvorrichtung 100 abgeführt.

Die Strömungsrichtung des Brenngases und des Abgases durch die Brennstoffzellenvorrichtung 100 ist in den Zeichnungen mit einfachen Pfeilen 210, die Strömungsrichtung des Oxidationsmittels durch die Brennstoffzellenvorrichtung 100 mittels Doppelpfeilen 212 angegeben.

Um die längs der Stapelrichtung 112 aufeinanderfolgenden Brennstoffzelleneinheiten 114 durch äußere Verspannung aneinander festzulegen, sind mehrere Verbindungsschrauben 214 vorgesehen, welche Durchgangsbohrungen 216 in den Endplatten 108, 110 des Brennstoffzellenblockverbunds 106 durchsetzen und an ihrem dem jeweiligen Schraubenkopf 218 abgewandten Ende mit einem Außengewinde 220 versehen sind, in welches jeweils eine Verbindungsmutter 222 eingedreht ist, so daß die Endplatten 108, 110 zwischen den Schraubenköpfen 218 und den Verbindungsmuttern 222 eingespannt sind und eine gewünschte Preßkraft über die Endplatten 108, 110 auf den Stapel der Brennstoffzelleneinheiten 114 übertragbar ist (siehe Fig. 2).

Der vorstehend beschriebene Brennstoffzellenblockverbund 106 wird wie folgt montiert:

Zunächst werden die einzelnen Brennstoffzelleneinheiten 114 montiert, indem jeweils eine KAE-Einheit 116 zwischen einer Kontaktplatte 118 und einem Fluidführungsrahmen 120 angeordnet wird und anschließend die aneinander anliegenden Flanschbereiche 136 der Kontaktplatte 118 sowie der Flanschbereich des Fluidführungsrahmens 120 gasdicht, beispielsweise durch Verschweißen oder Verlöten, miteinander verbunden werden. Anschließend wird das pastöse Ausgangsmaterial der Gaskanal-Dichtungen 188 auf die Dichtungsauflagebereiche 162 der Fluidführungsrahmen 120 aufgetragen. Dann wird der Brennstoffzellenblockverbund 106 aus den einzelnen Brennstoffzelleneinheiten 114 zusammengesetzt, indem die gewünschte Anzahl von Brennstoffzelleneinheiten 114 längs der Stapelrichtung 112 gestapelt wird und die Brennstoffzelleneinheiten 114 mittels der Endplatten 108, 110 und der die Endplatten gegeneinander verspannenden Verbindungsschrauben 214 und Verbindungsmuttern 222 in ihrer Lage relativ zueinander fixiert werden, wobei die durch die Distanzhalterelemente 191 gebildeten Distanzhalter 193 die Kontaktplatten 118 im Abstand von den jeweils gegenüberliegenden Fluidführungsrahmen 120 halten.

Eine zweite Ausführungsform einer Brenstoffzellenvorrichtung 100 unterscheidet sich von der vorstehend beschriebenen ersten Ausführungsform durch die Art der in der Gaskanal-Dichtung 188 verwendeten Distanzhalterelemente 191.

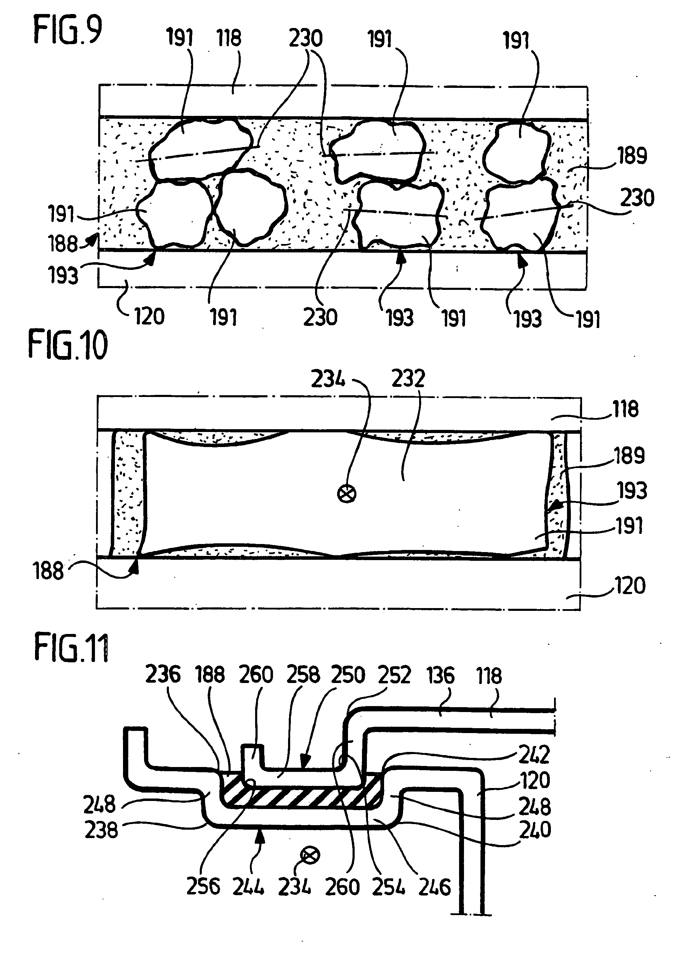

Wie aus dem schematischen Schnitt der Fig. 9 zu ersehen ist, werden bei dieser zweiten Ausführungsform Distanzhalterelemente 191, beispielsweise aus Magnesiumoxid, verwendet, welche die Gestalt von Körnern aufweisen, deren Korngröße kleiner ist als die Höhe des Dichtspalts zwischen der Kontaktplatte 118 und dem Fluidführungsrahmen 120, so daß sich diese Distanzhalterelemente 191 nicht über die gesamte Höhe der Gaskanal-Dichtung 188 erstrecken.

Vielmehr bilden die Distanzhalterelemente 191 bei dieser Ausführungsform zusammengesetzte Distanzhalter 193, die jeweils mehrere Distanzhalterelemente 191 umfassen, welche beim Aufeinanderpressen der Kontaktplatte 118 und des Fluidführungsrahmens 120 so gegeneinander verkeilt werden, daß sie die Kontaktplatte 118 und den Fluidführungsrahmen 120 in dem gewünschten Mindestabstand von beispielsweise ungefähr 100 µm voneinander halten.

Die einzelnen Distanzhalterelemente 191 können dabei anisotrop ausgebildet sein, das heißt in einer Längsrichtung 230 eine größere Ausdehnung aufweisen als in hierzu senkrechten Richtungen. Beim Gegeneinanderdrücken der Kontaktplatte 118 und des Fluidführungsrahmens 120 ordnen sich diese Distanzhalterelemente 191 dann bevorzugt so an, daß ihre Längsrichtung 230 im wesentlichen parallel zu den Grenzflächen der Kontaktplatte 118 und des Fluidführungsrahmens 120 ausgerichtet sind (siehe Fig. 9).

Im übrigen stimmt die zweite Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

Eine dritte Ausführungsform einer Brennstoffzellenvorrichtung 100 unterscheidet sich von der vorstehend beschriebenen ersten Ausführungsform dadurch, daß in die Matrix 189 ein Distanzhalterelement 191 eingebettet ist, dessen Ausdehnung in parallel zu den Grenzflächen der Kontaktplatte 118 und des Fluidführungsrahmens 120 verlaufenden Richtungen wesentlich größer ist als die Höhe der Gaskanal-Dichtung 188.

Beispielsweise kann als ein solches Distanzhalterelement 191 ein ringförmiger Körper 232, beispielsweise aus Glimmer, verwendet werden, der sich in der Umfangsrichtung 234 der Gaskanal-Dichtung 188 über deren gesamten Umfang und senkrecht zu der Umfangsrichtung 234 über nahezu die gesamte Breite der Gaskanal-Dichtung 188 erstreckt (siehe Fig. 10).

Dieser ringförmige Körper 232 steht an seiner Oberseite mit der Kontaktplatte 118 und an seiner Unterseite mit dem Fluidführungsrahmen 120 in zumindest punktförmigem Kontakt, wobei Rauhigkeiten an der Oberfläche des ringförmigen Körpers 232 durch das Material der Matrix 189 ausgefüllt sind, so daß diese Oberflächenrauhigkeiten ausgeglichen werden und die erforderliche Gasdichtheit der Gaskanal-Dichtung 188 gewährleistet ist.

Vorzugsweise wird der ringförmige Körper 232 aus einem Material mit einem hohen elektrischen Widerstand gebildet, beispielsweise aus Glimmer, um den gesamten elektrischen Widerstand der Gaskanal-Dichtung 188 zu erhöhen.

Im übrigen stimmt die dritte Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

Eine vierte Ausführungsform einer Brennstoffzellenvorrichtung 100 unterscheidet sich von der vorstehend beschriebenen Ausführungsform dadurch, daß der Dichtungsauflagebereich 162 des Fluidführungsrahmens 120 nicht durchgehend eben ausgebildet ist, sondern, wie in Fig. 11 dargestellt, durch Abkanten an zusätzlichen Biegelinien 236, 238, 240 und 242 eine sich in der Umfangsrichtung 234 der Gaskanal-Dichtung 188 erstreckende Vertiefung 244 mit einem Boden 246 und Seitenwänden 248 ausgebildet ist, in welcher die Gaskanal-Dichtung 188 angeordnet ist.

In diese Vertiefung 244 des Fluidführungsrahmens 152 taucht von oben ein Vorsprung 250 der Kontaktplatte 118 ein, welcher durch Abkanten an zusätzlichen Biegelinien 252, 254 und 256 gebildet ist und einen Boden 258 sowie Seitenwände 260 umfaßt.

Der Zwischenraum zwischen dem Vorsprung 250 der Kontaktplatte 118 und der Vertiefung 244 des Fluidführungsrahmens 120 ist durch die Gaskanal-Dichtung 188 vollständig ausgefüllt.

Die Gaskanal-Dichtung 188 weist den in Fig. 8 dargestellten Aufbau auf und umfaßt Distanzhalterelemente 191 in Form von Körnern mit einem mittleren Korndurchmesser von beispielsweise ungefähr 100 µm, der der Höhe der Gaskanal-Dichtung 188 entspricht, so daß diese Distanzhalterelemente 191 sich über den gesamten Dichtspalt zwischen der Kontaktplatte 118 und dem Fluidführungsrahmen 120 erstrecken.

Diese Distanzhalterelemente 191 können wie bei der ersten Ausführungsform aus einer Metalloxid-Keramik, insbesondere aus Magnesiumoxid, gebildet sein.

Die Matrix 189 ist bei der vierten Ausführungsform jedoch im Unterschied zu den vorher beschriebenen Ausführungsformen aus einem Material gebildet, welches bei der Betriebstemperatur der Dichtung von beispielsweise ungefähr 800°C nicht formstabil, sondern fließfähig ist.

Als ein solches Material kann ein Glaslot verwendet werden, das beispielsweise wie ein aus der EP 0 907 215 A1 bekanntes Glaslot zusammengesetzt sein kann, das heißt 11 bis 13 Gewichts-% Aluminiumoxid (Al₂O₃), 10 bis 14 Gewichts-% Boroxid (BO₂), etwa 5 Gewichts-% Kalziumoxid (CaO), 23 bis 26 Gewichts-% Bariumoxid (BaO) und etwa 50 Gewichts-% Siliziumoxid (SiO₂) enthalten kann.

Aufgrund der fehlenden Formstabilität der Matrix 189 der vierten Ausführungsform bei der Betriebstemperatur der Dichtung sind die Distanzhalterelemente 191 bei dieser Ausführungsform auch im Betrieb der Dichtung dazu erforderlich, die Kontaktplatte 118 und den Fluidführungsrahmen 120 auf dem vorgegebenen Mindestabstand voneinander zu halten.

Zur Herstellung der Gaskanal-Dichtung 188 bei der vierten Ausführungsform werden zunächst die Komponenten des Glaslotes miteinander aufgeschmolzen und das Glaslot nach dem Wiedererstarren zu einem Pulver zermahlen, welches mit Wasser versetzt wird, um eine pastöse Masse zu erhalten, welcher die Distanzhalterelemente 191 beigemischt werden. Das so erhaltene pastöse Ausgangsmaterial wird im Siebdruckverfahren oder durch Aufwalzen auf den Dichtungsauflagebereich 162 des Fluidführungsrahmens 152 aufgetragen.

Nach dem Erhitzen auf die Betriebstemperatur der Brennstoffzellenvorrichtung 100 von ungefähr 800°C schmilzt das Glaslot-Material der Matrix 189 auf und bildet eine gasdichte und elektrisch isolierende Komponente der Gaskanal-Dichtung 188.

Im übrigen stimmt die vierte Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

## Patentansprüche

1. Dichtung zum Abdichten eines Dichtspalts zwischen zwei abzudichtenden Bauteilen (118, 120) eines Brennstoffzellenblockverbunds (106), wobei die Dichtung (188) mindestens eine fluiddichte Komponente aus einem elektrisch isolierenden Material umfasst,
wobei die Dichtung zusätzlich zu der fluiddichten Komponente (189) mindestens einen Distanzhalter (193) umfasst, der sich über die gesamte Dicke der Dichtung (188) erstreckt und die beiden abzudichtenden Bauteile (118, 120) auf Distanz voneinander hält, wobei der Distanzhalter (193) aus mindestens einem bei der Betriebstemperatur der Dichtung (188) formstabilen Distanzhalterelement (191) gebildet ist,
**dadurch gekennzeichnet, dass**
die fluiddichte Komponente (189) eine Matrix bildet, in welcher das mindestens eine Distanzhalterelement (191) eingebettet ist, wobei
a) die Dichtung (188) eine Vielzahl von Distanzhalterelementen (191) umfasst, von denen sich jedes über die gesamte Dicke der Dichtung (188) erstreckt; oder
b) der mindestens eine Distanzhalter (193) mehrere Distanzhalterelemente (191) umfasst, welche so gegeneinander verkeilt sind, dass sie die beiden abzudichtenden Bauteile (118, 120) auf Distanz voneinander halten.

2. Dichtung nach Anspruch 1, **dadurch gekennzeichnet, dass** die Dichtung (188) eine Vielzahl von Distanzhalterelementen (191) umfasst, deren größte Längsausdehnung größer ist als ungefähr die halbe Dicke der Dichtung (188).

3. Dichtung nach einem der Ansprüche 1 oder 2, **dadurch gekennzeichnet, dass** die Dichtung (188) eine Vielzahl von Distanzhalterelementen (191) umfasst, die als Körner mit einer mittleren Korngröße von mehr als 10 µm, vorzugsweise von mehr als 50 µm ausgebildet sind.

4. Dichtung nach einem der Ansprüche 1 bis 3, **dadurch gekennzeichnet, dass** die Dichtung (188) mindestens ein Distanzhalterelement (191) umfasst, das sich in einer Längsrichtung (234) der Dichtung (188) über eine Länge erstreckt, die mindestens das Doppelte, vorzugsweise mindestens das Zehnfache, der Dicke der Dichtung (188) beträgt.

5. Dichtung nach einem der Ansprüche 1 bis 4, **dadurch gekennzeichnet, dass** die Dichtung (188) mindestens ein Distanzhalterelement (191) umfasst, das als ringförmig geschlossener Körper (232) ausgebildet ist.

6. Dichtung nach einem der Ansprüche 1 bis 5, **dadurch gekennzeichnet, dass** das mindestens eine Distanzhalterelement (191) aus einem elektrisch isolierenden Material gebildet ist.

7. Dichtung nach einem der Ansprüche 1 bis 6, **dadurch gekennzeichnet, dass** das mindestens eine Distanzhalterelement (191) ein Oxid-Keramik-Material und/oder ein Glaskeramik-Material umfasst.

8. Dichtung nach Anspruch 7, **dadurch gekennzeichnet, dass** das mindestens eine Distanzhalterelement (191) ein Metalloxid-Keramik-Material, vorzugsweise Magnesiumoxid, Aluminiumoxid und/oder Zirkonoxid, umfasst.

9. Dichtung nach einem der Ansprüche 1 bis 8, **dadurch gekennzeichnet, dass** die fluiddichte Komponente ein Material umfasst, das während einer Herstellungsphase der Dichtung (188) und/oder im Betriebszustand der Dichtung (188) nicht formstabil ist.

10. Dichtung nach einem der Ansprüche 1 bis 9, **dadurch gekennzeichnet, dass** die fluiddichte Komponente ein Material umfasst, das im Betriebszustand der Dichtung (188) formstabil ist.

11. Dichtung nach einem der Ansprüche 1 bis 10, **dadurch gekennzeichnet, dass** die fluiddichte Komponente (189) Natriumsilikat umfasst.

12. Dichtung nach einem der Ansprüche 1 bis 11, **dadurch gekennzeichnet, dass** die fluiddichte Komponente (189) Glimmer, vorzugsweise Phlogopit, als Füllstoff umfasst.

13. Dichtung nach einem der Ansprüche 1 bis 12, **dadurch gekennzeichnet, dass** das Material des mindestens einen Distanzhalterelements (191) einen thermischen Ausdehnungskoeffizienten aufweist, der bei der Betriebstemperatur der Dichtung (188) um höchstens 50 %, vorzugsweise um höchstens 30 %, von dem thermischen Ausdehnungskoeffi-zienten des Materials der fluiddichten Komponente abweicht.

14. Bauteilgruppe, umfassend zwei gegeneinander abzudichtende Bauteile (118, 120) eines Brennstoffzellenblockverbundes (106) und eine zwischen den beiden Bauteilen (118, 120) angeordnete Dichtung (188) nach einem der Ansprüche 1 bis 13.

15. Bauteilgruppe nach Anspruch 14, **dadurch gekennzeichnet, dass** das Material mindestens eines der gegeneinander abzudichtenden Bauteile (118, 120) einen thermischen Ausdehnungskoeffizienten aufweist, der bei der Betriebstemperatur der Bauteilgruppe um höchstens 50 %, vorzugsweise um höchstens 30 %, von dem thermischen Ausdehnungskoeffizienten des Materials der fluiddichten Komponente (189) abweicht.

16. Bauteilgruppe nach einem der Ansprüche 14 oder 15, **dadurch gekennzeichnet, dass** das Material mindestens eines der gegeneinander abzudichtenden Bauteile (118, 120) einen thermischen Ausdehnungskoeffizienten aufweist, der bei der Betriebstemperatur der Bauteilgruppe um höchstens 50 %, vorzugsweise um höchstens 30 %, von dem thermischen Ausdehnungskoeffizienten des Materials des mindestens einen Distanzhalterelements (191) abweicht.

17. Bauteilgruppe nach einem der Ansprüche 14 bis 16, **dadurch gekennzeichnet, dass** das Material mindestens eines der gegeneinander abzudichtenden Bauteile (118, 120) ein metallisches Material, vorzugsweise einen Stahl, umfasst.

18. Bauteilgruppe nach einem der Ansprüche 14 bis 17, **dadurch gekennzeichnet, dass** mindestens eines der gegeneinander abzudichtenden Bauteile (118, 120) eine Vertiefung (244) aufweist, in welcher die Dichtung (188) zumindest teilweise aufgenommen ist.

19. Brennstoffzellenblockverbund, umfassend mindestens eine Bauteilgruppe nach einem der Ansprüche 14 bis 18.

## Claims

1. Gasket for packing a sealing gap between two components (118,120) of a composite fuel cell block (106) that are to be sealed, wherein the gasket (188) comprises at least one fluid-tight component made of an electrically insulating material,
wherein the gasket in addition to the fluid-tight component (189) comprises at least one spacer (193) that extends over the entire thickness of the gasket (188) and keeps the two components (118, 120) that are to be sealed off at a distance from one another, wherein the spacer (193) is formed from at least one spacer element (191) that is dimensionally stable at the operating temperature of the gasket (188), **characterized in that**
the fluid-tight component (189) forms a matrix, in which the at least one spacer element (191) is embedded, wherein
a) the gasket (188) comprises a plurality of spacer elements (191), each of which extends over the entire thickness of the gasket (188); or
b) the at least one spacer (193) comprises a plurality of spacer elements (191), which are wedged against one another in such a way that they keep the two components (118, 120) that are to be sealed at a distance from one another.

2. Gasket according to claim 1, **characterized in that** the gasket (188) comprises a plurality of spacer elements (191), the largest longitudinal extent of which is greater than approximately half the thickness of the gasket (188).

3. Gasket according to one of claims 1 or 2, **characterized in that** the gasket (188) comprises a plurality of spacer elements (191) that take the form of grains having an average grain size of more than 10 µm, preferably of more than 50 µm.

4. Gasket according to one of claims 1 to 3, **characterized in that** the gasket (188) comprises at least one spacer element (191), which extends in a longitudinal direction (234) of the gasket (188) over a length that is at least twice, preferably at least ten times, the thickness of the gasket (188).

5. Gasket according to one of claims 1 to 4, **characterized in that** the gasket (188) comprises at least one spacer element (191) that takes the form of a body (232) closed in a ring-shaped manner.

6. Gasket according to one of claims 1 to 5, **characterized in that** the at least one spacer element (191) is formed from an electrically insulating material.

7. Gasket according to one of claims 1 to 6, **characterized in that** the at least one spacer element (191) comprises an oxide ceramic material and/or a glass ceramic material.

8. Gasket according to claim 7, **characterized in that** the at least one spacer element (191) comprises a metal oxide ceramic material, preferably magnesium oxide, aluminium oxide and/or zirconium oxide.

9. Gasket according to one of claims 1 to 8, **characterized in that** the fluid-tight component comprises a material that during a manufacturing phase of the gasket (188) and/or in the operating state of the gasket (188) is not dimensionally stable.

10. Gasket according to one of claims 1 to 9, **characterized in that** the fluid-tight component comprises a material that in the operating state of the gasket (188) is dimensionally stable.

11. Gasket according to one of claims 1 to 10, **characterized in that** the fluid-tight component (189) comprises sodium silicate.

12. Gasket according to one of claims 1 to 11, **characterized in that** the fluid-tight component (189) comprises mica, preferably phlogopite, as a filling material.

13. Gasket according to one of claims 1 to 12, **characterized in that** the material of the at least one spacer element (191) has a thermal expansion coefficient that at the operating temperature of the gasket (188) varies by at most 50 %, preferably by at most 30 %, from the thermal expansion coefficient of the material of the fluid-tight component.

14. Assembly, comprising two components (118, 120) of a composite fuel cell block (106) that are to be sealed against each another as well as a gasket (188) according to one of claims 1 to 13 that is disposed between the two components (118, 120).

15. Assembly according to claim 14, **characterized in that** the material of at least one of the components (118, 120) that are to be sealed against each another has a thermal expansion coefficient that at the operating temperature of the assembly varies by at most 50 %, preferably by at most 30 %, from the thermal expansion coefficient of the material of the fluid-tight component (189).

16. Assembly according to one of claims 14 or 15, **characterized in that** the material of at least one of the components (118, 120) that are to be sealed against each another has a thermal expansion coefficient that at the operating temperature of the assembly varies by at most 50 %, preferably by at most 30 %, from the thermal expansion coefficient of the material of the at least one spacer element (191).

17. Assembly according to one of claims 14 to 16, **characterized in that** the material of at least one of the components (118, 120) that are to be sealed against each another comprises a metallic material, preferably a steel.

18. Assembly according to one of claims 14 to 17, **characterized in that** at least one of the components (118, 120) that are to be sealed against each another has a recess (244), in which the gasket (188) is at least partially received.

19. Composite fuel cell block, comprising at least one assembly according to one of claims 14 to 18.

## Revendications

1. Joint pour l'étanchéification d'une fente d'étanchéité entre deux éléments de construction (118, 120) à étanchéifier d'un assemblage en bloc de cellules de combustible (106), le joint (188) comprenant au moins un composant étanche au fluide à base d'un matériau électroisolant,
le joint comprenant en supplément du composant (189) étanche au fluide au moins un écarteur (193), qui s'étend sur l'ensemble de l'épaisseur du joint (188) et maintient les deux éléments de construction (118, 120) à étanchéifier à distance l'un de l'autre, l'écarteur (193) étant formé à base d'au moins un élément d'écarteur (191) indéformable à la température de service du joint (188),
**caractérisé en ce que**
le composant (189) étanche au fluide forme une matrice dans laquelle le au moins un élément d'écarteur (191) est noyé,
a) le joint (188) comprenant une pluralité d'éléments d'écarteur (191), dont chacun s'étend sur l'ensemble de l'épaisseur du joint (188), ou
b) le au moins un écarteur (193) comprenant plusieurs éléments d'écarteur (191), qui sont calés les uns par rapport aux autres de telle sorte qu'ils maintiennent les deux éléments de construction (118, 120) à étanchéifier à distance l'un de l'autre.

2. Joint selon la revendication 1, **caractérisé en ce que** le joint (188) comprend une pluralité d'éléments d'écarteur (191), dont l'extension longitudinale maximale est supérieure à environ la demi-épaisseur du joint (188).

3. Joint selon l'une quelconque des revendications 1 ou 2, **caractérisé en ce que** le joint (188) comprend une pluralité d'éléments d'écarteur (191), qui sont conçus sous forme de grains avec une grosseur de grain moyenne supérieure à 10 µm, de préférence supérieure à 50 µm.

4. Joint selon l'une quelconque des revendications 1 à 3, **caractérisé en ce que** le joint (188) comprend au moins un élément d'écarteur (191) qui s'étend dans une direction longitudinale (234) du joint (188) sur une longueur qui représente au moins le double, de préférence au moins dix fois l'épaisseur du joint (188).

5. Joint selon l'une quelconque des revendications 1 à 4, **caractérisé en ce que** le joint (188) comprend au moins un élément d'écarteur (191) qui est conçu sous forme de corps (232) fermé en forme de bague.

6. Joint selon l'une quelconque des revendications 1 à 5, **caractérisé en ce que** le au moins un élément d'écarteur (191) est à base d'un matériau électro-isolant.

7. Joint selon l'une quelconque des revendications 1 à 6, **caractérisé en ce que** le au moins un élément d'écarteur (191) comprend un matériau à base d'oxyde et de céramique et/ou un matériau à base de vitrocéramique.

8. Joint selon la revendication 7, **caractérisé en ce que** le au moins un élément d'écarteur (191) comprend un matériau à base d'oxyde de métal et de céramique, de préférence de l'oxyde de magnésium, de l'oxyde d'aluminium, et/ou de l'oxyde de zirconium.

9. Joint selon l'une quelconque des revendications 1 à 8, **caractérisé en ce que** le composant étanche au fluide comprend un matériau qui n'est pas indéformable pendant une phase de fabrication du joint (188) et/ou dans l'état de service du joint (188).

10. Joint selon l'une quelconque des revendications 1 à 9, **caractérisé en ce que** le composant étanche au fluide comprend un matériau qui est indéformable dans l'état de service du joint (188).

11. Joint selon l'une quelconque des revendications 1 à 10, **caractérisé en ce que** le composant (189) étanche au fluide comprend du silicate de sodium.

12. Joint selon l'une quelconque des revendications 1 à 11, **caractérisé en ce que** le composant (189) étanche au fluide comprend du mica, de préférence de la phlogopite, comme matière de charge.

13. Joint selon l'une quelconque des revendications 1 à 12, **caractérisé en ce que** le matériau du au moins un élément d'écarteur (191) présente un coefficient de dilatation thermique qui, à la température de service du joint (188), diffère d'au maximum 50 %, de préférence d'au maximum 30 %, du coefficient de dilatation thermique du matériau du composant étanche au fluide.

14. Ensemble d'élément de construction, comprenant deux éléments de construction (118, 120) à étanchéifier l'un par rapport à l'autre d'un assemblage en bloc de cellules de combustible (106) et un joint (188) disposé entre les deux éléments de construction (118, 120) selon l'une quelconque des revendications 1 à 13.

15. Ensemble d'élément de construction selon la revendication 14, **caractérisé en ce que** le matériau d'au moins l'un des éléments de construction (118, 120) à étanchéifier l'un par rapport à l'autre présente un coefficient de dilatation thermique qui, à la température de service de l'ensemble d'élément de construction, diffère d'au maximum 50 %, de préférence d'au maximum 30 %, du coefficient de dilatation thermique du matériau du composant (189) étanche au fluide.

16. Ensemble d'élément de construction selon l'une quelconque des revendications 14 ou 15, **caractérisé en ce que** le matériau d'au moins l'un des éléments de construction (118, 120) à étanchéifier l'un par rapport à l'autre présente un coefficient de dilatation thermique, qui, à la température de service de l'ensemble d'élément de construction, diffère d'au maximum 50 %, de préférence d'au maximum 30 %, du coefficient de dilatation thermique du matériau du au moins un élément d'écarteur (191).

17. Ensemble d'élément de construction selon l'une quelconque des revendications 14 à 16, **caractérisé en ce que** le matériau d'au moins l'un des éléments de construction (118, 120) à étanchéifier l'un par rapport à l'autre comprend un matériau métallique, de préférence un acier.

18. Ensemble d'élément de construction selon l'une quelconque des revendications 14 à 17, **caractérisé en ce qu'**au moins l'un des composants (118, 120) à étanchéifier l'un par rapport à l'autre présente une cavité (244) dans laquelle le joint (188) est réceptionné au moins partiellement.

19. Assemblage en bloc de cellules de combustible, comprenant au moins un ensemble d'élément de construction selon l'une quelconque des revendications 14 à 18.
